# FASCICULE DE BREVET EUROPEEN

(11) **EP 1 128 512 B1**
(45) Date de publication et mention de la délivrance du brevet: **02.09.2009**
(21) Numéro de dépôt: 01400346.1
(22) Date de dépôt: 09.02.2001
(51) Int. Cl.: H02G 3/04

(54) **Embout de fermeture d'une goulotte de cheminement de câbles ou de conducteurs électriques**
Endstück für den Führungskanal elektrischer Leiter oder Kabel
End piece for cable or electrical wiring duct

(30) Priorité: 24.02.2000 FR 0002331
(43) Date de publication de la demande: 29.08.2001
(73) Titulaire: Legrand France, 87000 Limoges (FR); Legrand SNC, 87000 Limoges (FR)
(72) Inventeur: Buard, Yvon, 53600 Voutre (FR)
(74) Mandataire: Santarelli

(56) Documents cités:
- EP-A- 0 908 991

## Description

La présente invention concerne un embout pour goulotte, du type de celle mise en oeuvre, par exemple, pour le support, le logement et la protection de divers appareillages, en particulier de divers appareillages électriques aussi bien que le support, le logement et la protection des câbles ou conducteurs électriques nécessaires à la desserte de ces appareillages.

Plus particulièrement, elle concerne un embout comprenant une partie d'obturation pour fermer l'espace intérieur de la goulotte, et une partie de fixation sur le fond du socle de la goulotte, les parties d'obturation et de fixation étant raccordées l'une à l'autre par une partie de raccordement.

Un tel embout est destiné à protéger l'extrémité de la goulotte contre les chocs et, surtout, à protéger les personnes par rapport aux conducteurs ou câbles électriques circulant dans la goulotte.

Les deux fonctions se combinent d'ailleurs lorsque l'on veut empêcher l'introduction de corps étrangers du type fil, épingle ou tournevis à l'intérieur de cette goulotte.

En outre, un tel embout assure une fonction esthétique notamment par la transition harmonieuse entre la surface extérieure de la goulotte et celle du support sur lequel la goulotte est fixée.

De manière classique, les embouts sont constitués de deux pièces, à savoir un support et un cache.

Cela permet d'obtenir une esthétique soignée grâce en particulier au recouvrement de la coupe du couvercle de fermeture de la goulotte par le cache de l'embout.

Toutefois, la mise en place de ces embouts sur l'extrémité d'une goulotte est relativement complexe et devient difficile lorsque l'extrémité de la goulotte à fermer est située dans un angle d'une paroi.

Par ailleurs, la réalisation d'un embout en deux pièces séparées est relativement onéreuse.

En outre, on connaît un embout monobloc, c'est-à-dire un support et un cache formant une seule pièce issue de moulage. Pour pouvoir correctement fixer un tel embout sur le fond d'un socle d'une goulotte, il doit être positionné avant la mise en place du couvercle de fermeture de ladite goulotte. Or, du fait que cet embout doit généralement recouvrir une coupe d'extrémité dudit couvercle de fermeture, il n'est pas toujours aisé de mettre en place ce dernier après avoir fixé l'embout monobloc sur le fond du socle de la goulotte. Cela s'avère même parfois impossible lorsque la portion de goulotte en question est relativement courte.

Le document EP-A-0 908 991 décrit un embout destiné à s'emboîter sur une goulotte.

Un but essentiel de l'invention est donc de fournir un embout qui demeure d'une fabrication économique et dont le montage sur la goulotte est particulièrement simple et rapide.

Pour atteindre un tel but, l'invention propose un embout du type défini en introduction, dans lequel ladite partie de raccordement constitue une liaison élastique qui autorise un déplacement de la partie d'obturation par rapport à la partie de fixation.

Ainsi, avantageusement, un tel embout peut être réalisé en une seule pièce et est rapide à mettre en place, tout en procurant une meilleure résistance mécanique notamment en cas de chocs.

Il peut être mis simplement sur le socle de la goulotte soit en introduisant l'embout selon une direction perpendiculaire à la paroi de montage, ce qui autorise sa mise en place dans des endroits peu accessibles, soit en l'enfilant à l'extrémité du socle de la goulotte de manière classique.

Grâce à l'embout selon l'invention, il est possible de mettre aisément le couvercle de fermeture de la goulotte après que l'embout ait été monté sur le socle de goulotte.

En effet, dans ce cas, il suffit simplement de déplacer légèrement la partie d'obturation par rapport à la partie de fixation fixée sur le socle de la goulotte, afin de l'écarter de celle-ci, pour mettre en place le couvercle de fermeture de la goulotte, puis, par retour élastique, la partie d'obturation de l'embout vient recouvrir la coupe d'extrémité du couvercle de fermeture pour assurer une fermeture sécurisée et parfaire l'esthétique de l'ensemble de la goulotte fermée.

D'autres caractéristiques non limitatives et avantageuses de l'embout selon l'invention sont les suivantes :
- la liaison élastique est agencée de manière à autoriser un léger déplacement en translation selon la direction longitudinale de la goulotte de la partie d'obturation par rapport à la partie de fixation ;
- la liaison élastique forme une articulation autorisant un léger débattement angulaire de la partie d'obturation par rapport à la partie de fixation ;
- la partie de fixation, la partie d'obturation et la liaison élastique forment une seule pièce issue de moulage de matière plastique ;
- la partie d'obturation comporte une paroi de fermeture de l'intérieur de la goulotte et une portion de couvercle destinée à recouvrir une coupe du couvercle de fermeture de ladite goulotte, la paroi de fermeture et la portion de couvercle formant une seule pièce issue de moulage ;
- la liaison souple comprend au moins une languette ondulée dont une extrémité est liée à la partie de fixation et dont l'autre extrémité est liée à la partie d'obturation ;
- la languette ondulée est agencée de sorte que ses ondulations s'étendent de part et d'autre d'un plan vertical longitudinal ;
- ladite languette ondulée est agencée de sorte que ses ondulations s'étendent de part et d'autre d'un plan horizontal longitudinal ;
- la liaison élastique est une languette souple qui s'étend généralement en oblique entre ladite partie de fixation et ladite partie d'obturation ;
- la liaison élastique est une languette souple qui s'étend dans un plan horizontal selon l'axe longitudinal de la goulotte à partir de la base de la partie d'obturation jusqu'à la base de la partie de fixation ;
- la liaison élastique est une languette souple qui s'étend dans un plan horizontal selon l'axe longitudinal de la goulotte en hauteur par rapport au socle de la goulotte ;
- la liaison élastique est réalisée par moulage d'une matière plastique souple et les parties d'obturation et de fixation étant réalisées par moulage d'une matière plastique rigide, l'ensemble formant une pièce monobloc.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de côté d'une portion de goulotte fermée à une extrémité par un embout selon l'invention ;
- la figure 2 est une vue en perspective de dessus d'un mode de réalisation préférentiel de l'embout selon l'invention ;
- la figure 3 est une vue en coupe dans un plan longitudinal horizontal positionné à mi-hauteur de l'embout de la figure 2 ;
- la figure 4 est une vue en coupe selon le plan A-A de la goulotte représentée sur la figure 1 ;
- la figure 5 est une vue en coupe selon le plan B-B de la figure 4 ;
- la figure 6 est une vue en perspective d'un deuxième mode de réalisation de l'embout selon l'invention ;
- la figure 7 est une vue en perspective d'un troisième mode de réalisation de l'embout selon l'invention ;
- les figures 8 à 11 sont des vues schématiques dans un plan vertical de quatre modes de réalisation différents de l'embout conforme à l'invention ;

Préliminairement, on notera que, d'une figure à l'autre, les parties identiques ou similaires des différents modes de réalisation seront dans la mesure du possible référencées par les mêmes signes de référence et ne seront pas décrites à chaque fois.

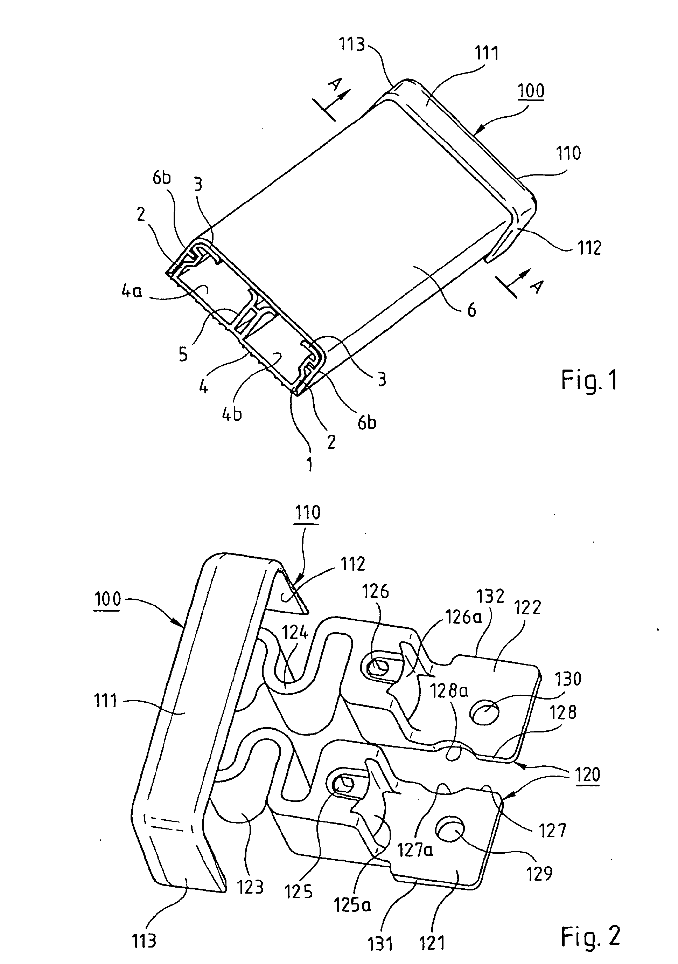

Sur la figure 1 on a représenté une goulotte 1 de petites dimensions, appelée encore moulure, dans laquelle sont destinés à cheminer des conducteurs ou câbles électriques.

De manière connue en soi, cette moulure 1 comporte un socle présentant un fond 4 bordé par deux ailes latérales longitudinales 2, le socle présentant en section, ici, la forme générale d'un U.

Dans le mode de réalisation représenté, les ailes latérales longitudinales 2 du socle de la goulotte comportent des retours 3 dirigés l'un vers l'autre dans un plan sensiblement transversal aux ailes latérales 2.

En outre, ici, le socle de la goulotte est divisé en deux compartiments longitudinaux par une paroi centrale longitudinale 5 présentant à son extrémité libre des rebords divergents, chaque rebord étant dirigé vers un retour 3 d'une aile latérale longitudinale 2 du socle de la goulotte.

Ainsi, le fond 4 du socle de la goulotte 1 est divisé en deux parties 4a, 4b ; ici chaque compartiment présente en section la forme générale d'un U.

La goulotte 1 est fermée par un couvercle de fermeture 6 qui comporte ici des bords tombants venant recouvrir les surfaces extérieures des ailes latérales longitudinales 2 du socle de la goulotte.

Bien entendu, selon un autre mode de réalisation non représenté, on peut prévoir que le couvercle de fermeture de la goulotte 1 soit un couvercle à bord droit enfilé dans des rainures longitudinales prévues sur chacun des retours des ailes latérales longitudinales de ladite goulotte.

Une extrémité de la goulotte 1 représentée sur la figure 1 est fermée par un embout 100.

Cet embout est destiné à protéger l'extrémité de la goulotte contre les chocs et surtout permet d'éviter d'avoir accès par cette extrémité aux conducteurs ou câbles électriques circulant dans cette goulotte, ou d'introduire à l'intérieur de la goulotte des corps étrangers tels que fil, épingle, tournevis etc..

De plus, cet embout 100 permet de parfaire l'esthétique de la goulotte en assurant une transition harmonieuse entre la surface extérieure du couvercle recouvrant le socle de la goulotte et le support sur lequel la goulotte est fixée.

A propos d'un tel support, il peut s'agir d'un mur ou d'une paroi verticale.

Un premier mode de réalisation préférentiel de l'embout 100 va être décrit maintenant en référence aux figures 2 à 5.

L'embout 100 représenté sur ces figures, comporte une partie d'obturation 110 et une partie de fixation 120 sur le fond du socle de la goulotte.

La partie d'obturation 110 comprend, ici, une paroi de fermeture 114 de l'espace intérieur de la goulotte et une portion de couvercle 111 destinée à recouvrir une coupe du couvercle de fermeture 6 de la goulotte (voir plus particulièrement la figure 1).

A cet effet, la portion de couvercle 111 de la partie d'obturation 110 de l'embout 100 comporte des bords tombants 112, 113 recouvrant les bords tombants 6a, 6b du couvercle de fermeture 6 de la goulotte 1.

La portion de couvercle 111, 112, 113 et la paroi de fermeture 114 de la partie d'obturation 110 de l'embout forment une seule pièce.

En outre, l'embout 100 comporte une partie de fixation 120 sur le fond 4 du socle de la goulotte.

Ici, la partie de fixation 120 et la partie d'obturation 110 de l'embout forment une seule pièce issue de moulage d'une ou plusieurs matière(s) plastique(s).

Ici, cette partie de fixation 120 comprend deux pattes 121, 122, chacune des pattes étant destinée à s'engager dans un des compartiments de la goulotte 1 et à s'appliquer contre le fond 4a, 4b de ces compartiments.

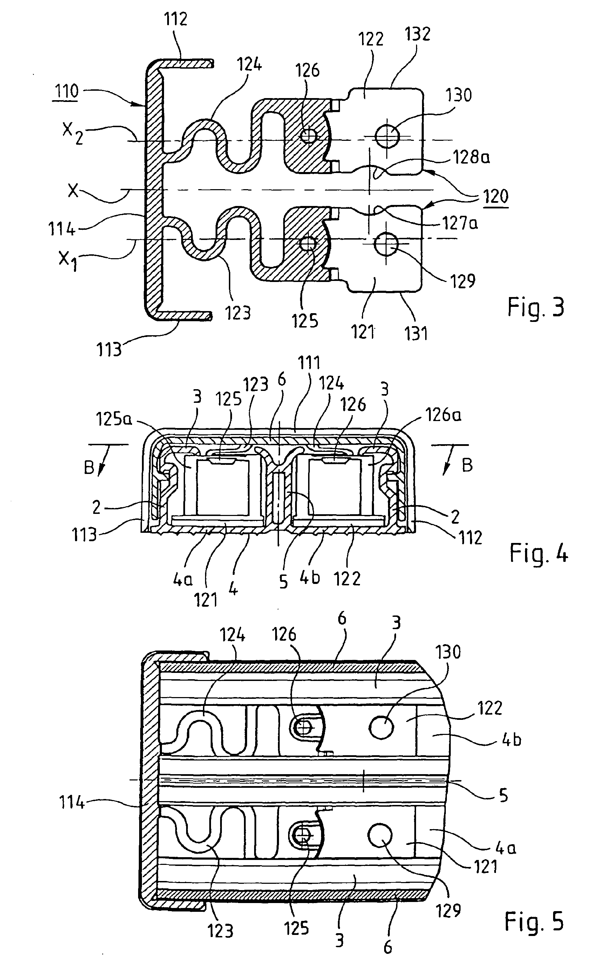

Chacune des pattes 121, 122 porte dans une région d'extrémité située du côté de la partie d'obturation 110 une cheminée 125, 126 qui s'élève sensiblement perpendiculairement à ladite patte et plus particulièrement perpendiculairement au fond 4a, 4b du socle de la goulotte et qui présente avantageusement une hauteur sensiblement égale à la profondeur du socle de la goulotte (voir plus particulièrement la figure 4).

Chaque cheminée 125, 126 constituée par un conduit cylindrique sert à l'introduction d'un clou d'ancrage de chacune des pattes dans la paroi support de la goulotte.

Ce clou d'ancrage traverse le socle de la goulotte pour s'ancrer dans la paroi supportant ladite goulotte.

Avantageusement, l'extrémité supérieure de chacune des cheminées 125, 126 par laquelle est introduit le clou d'ancrage arrive à effleurement des sommets des ailes latérales longitudinales 2 de ladite goulotte 1.

Ainsi, lors du clouage de chacune des pattes sur le socle de la goulotte, la cheminée forme un limiteur de course du marteau, ce qui permet d'éviter une détérioration malencontreuse d'une aile du socle de la goulotte.

Cela est particulièrement avantageux dans le cas de goulottes de petites dimensions où l'espace intérieur de la goulotte est relativement restreint et le fond du socle est difficile d'accès pour un clouage d'une patte en fond de socle.

Dans l'exemple représenté sur les figures 2 à 5, chaque cheminée 125, 126 est réalisée dans une partie relativement massique formant une sorte de bossage à l'extrémité de chacune des pattes de fixation 121, 122.

En outre, chacune des pattes de fixation 121, 122 est raccordée à la partie d'obturation 110, et plus particulièrement à la paroi de fermeture 114 par une partie de raccordement 123, 124.

Ici, chaque cheminée 125, 126 est située à la jonction entre la partie de raccordement 123, 124 et la patte 121, 122.

Selon le mode de réalisation représenté sur les figures 2 à 5, chaque partie de raccordement 123, 124 est constituée par une languette ou branche ondulée.

Une extrémité de la languette ou branche est raccordée à la paroi de fermeture 114 de la partie d'obturation 110 et une autre extrémité est raccordée à la surface extérieure 125a, 126a de la partie relativement massique dans laquelle est réalisée chaque cheminée 125, 126.

L'ondulation de chaque branche ou chaque languette 123, 124 constituant une partie de raccordement, est réalisée de part et d'autre d'un plan vertical s'étendant selon un axe X1 ou X2 parallèle à l'axe longitudinal X de l'embout qui est celui de la goulotte.

Une telle partie de raccordement 123, 124 constitue alors une liaison élastique entre la partie de fixation 120 et la partie d'obturation 110, autorisant un léger déplacement de la partie d'obturation par rapport à la partie de fixation lorsque l'embout est monté sur l'extrémité du socle de la goulotte.

Cela est particulièrement avantageux lorsque, comme cela est représenté sur les figures 2 à 5, la partie d'obturation, la partie de fixation et la partie de raccordement forment une seule pièce issue de moulage d'une ou plusieurs matière(s) plastique(s), et que la partie d'obturation comporte une portion de couvercle à bords tombants, comme cela a été précédemment décrit.

Ainsi, dans ce cas, la mise en place de l'embout sur le socle de la goulotte est relativement aisée et peut se faire même dans des conditions où l'extrémité du socle de la goulotte est difficile d'accès, cela est notamment le cas lorsque l'extrémité est placée dans un angle d'une paroi.

Lorsque l'extrémité de la goulotte est d'accès difficile, la partie de fixation de l'embout peut être mise en place sur le fond du socle de la goulotte, selon une direction de mise en place sensiblement perpendiculaire à l'axe X de ladite goulotte.

Quand la situation de l'extrémité de la goulotte le permet, l'embout peut être enfilé dans le socle de la goulotte selon l'axe X de celle-ci quand la situation de l'extrémité de la goulotte le permet.

La partie de fixation 120 de l'embout est fixée par clouage sur le fond du socle de la goulotte.

Puis la partie d'obturation 110 de l'embout 100 est légèrement déplacée en translation selon l'axe longitudinal de la goulotte vers l'extérieur du socle de manière à pouvoir positionner facilement le couvercle de fermeture de la goulotte sur celle-ci de façon à ce que sa coupe arrive à proximité de l'extrémité de ladite goulotte. En fait, la partie d'obturation est écartée de la partie de fixation de l'embout pour faciliter la pose du couvercle de fermeture de la goulotte sur cette dernière.

Enfin, par retour élastique de la partie d'obturation à sa position initiale, la portion de couvercle de cette partie d'obturation vient recouvrir la coupe du couvercle de fermeture en place sur le socle de la goulotte.

Cette liaison élastique entre la partie de fixation 120 et la partie d'obturation 110 de l'embout 100 permet, outre un déplacement en translation de la partie d'obturation par rapport à la partie de fixation, un mouvement léger de basculement des deux parties l'une par rapport à l'autre.

Comme le montrent plus particulièrement les figures 4 et 5, lorsque l'embout est mis en place à l'extrémité du socle de la goulotte, les cheminées s'élèvent perpendiculairement au fond du socle, et leurs extrémités supérieures sont coincées sous les retours 3 des ailes latérales longitudinales 2 du socle de la goulotte.

La partie d'obturation ferme transversalement la goulotte, avec sa portion de couvercle recouvrant une partie d'extrémité du couvercle de fermeture de ladite goulotte.

Bien entendu, l'embout, tel que représenté sur les figures 2 à 5, permet également sa fixation sur le socle de la goulotte par vissage, grâce à deux orifices 129, 130 prévus à chacune des extrémités libres des pattes 121, 122.

Par ailleurs, les bords longitudinaux intérieurs en vis-à-vis 127, 128 de chacune des pattes 121, 122 comprennent ici des évidements en regard 127a, 128a en forme de portion de cercle et définissant entre eux un logement pour la solidarisation éventuelle de la partie de fixation de l'embout au socle de la goulotte par un organe de fixation tel qu'une cheville plastique.

Un tel mode de fixation ne peut être envisagé que dans le cas où la goulotte est monocompartimentale, ce qui n'est pas le cas de la goulotte représentée sur les figures.

D'autres modes de réalisation peuvent être envisagés pour réaliser les parties de raccordement 123, 124 constituant la liaison élastique de la partie de fixation 120 à la partie d'obturation 110 de l'embout 100.

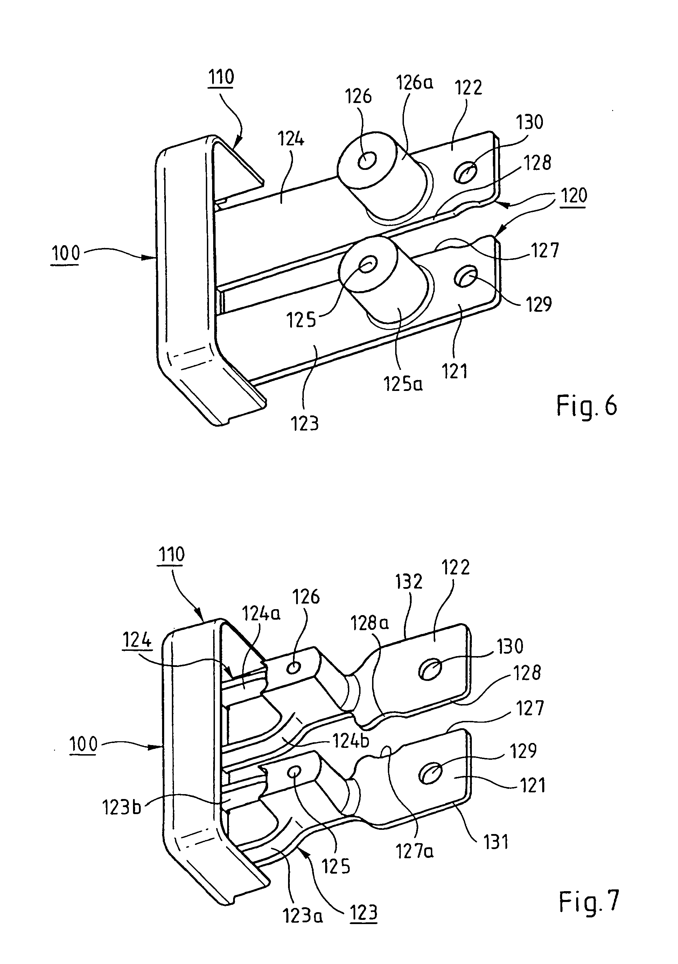

Parmi ces autres modes de réalisation, il y a ceux représentés sur les figures 6 à 11.

En effet, sur la figure 6, la partie de raccordement 123, 124 de chaque patte 121, 122 à la partie d'obturation, est constituée par un prolongement de chaque patte elle-même.

En outre, selon ce mode de réalisation simplifié, la paroi externe de chaque cheminée 125a, 126a est une paroi cylindrique de révolution.

Selon le mode de réalisation représenté sur la figure 7, chaque partie de raccordement 123, 124 de chaque patte 121, 122 à la partie d'obturation 110, comprend deux branches 123a, 123b, 124a, 124b s'étendant à partir d'une extrémité de chaque patte 121, 122 (où est située une cheminée) de part et d'autre de ses bords longitudinaux 127, 131, 128, 132, lesdites branches 123a, 123b et 124a, 124b formant une sorte de fourche de raccordement de ladite patte à la partie d'obturation 110.

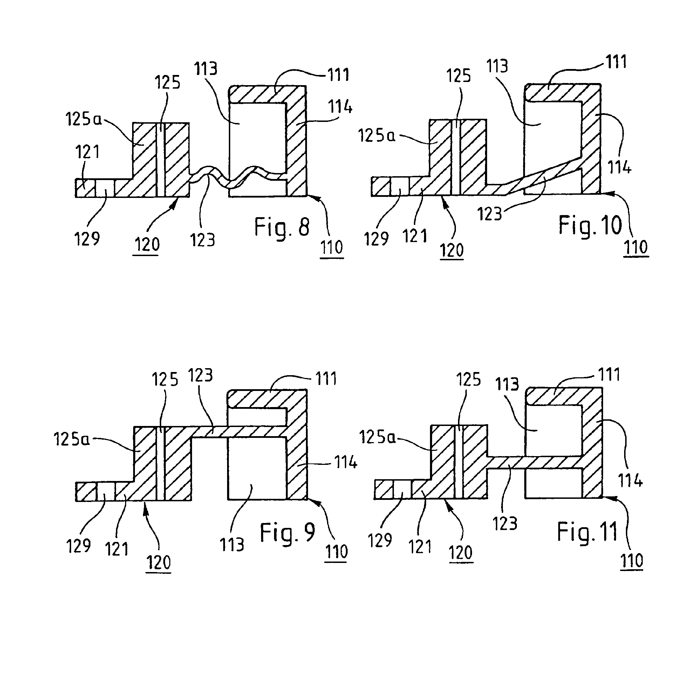

Selon un autre mode de réalisation représenté plus particulièrement sur la figure 8, il peut être prévu que la partie de raccordement ondulée 123 de la partie de fixation 120 à la partie d'obturation 110, présente une ondulation de part et d'autre d'un plan horizontal longitudinal.

Il peut également être prévu que chaque partie de raccordement 123 est constituée par une languette qui s'étend entre la paroi externe 125a de la cheminée 125 et la partie d'obturation 110, selon une direction généralement oblique, comme cela est représenté sur la figure 10.

Sur les figures 9 et 11, chaque partie de raccordement 123 s'étend entre une paroi externe 125a de la cheminée 125 et la partie d'obturation 110 en hauteur par rapport à chaque patte de fixation 121.

Sur la figure 9, la languette de raccordement 123 est située environ à la hauteur de l'extrémité supérieure de la cheminée et, sur la figure 11, la languette de raccordement 123 s'étend à peu près à mi-hauteur entre la patte de fixation 121 et la partie supérieure de la cheminée 125.

Pour réaliser une liaison élastique entre la partie de fixation 120 et la partie d'obturation 110 de l'embout selon l'invention, on peut également mouler la partie de raccordement en une matière plastique souple par rapport à la partie de fixation et à la partie d'obturation réalisées en matière plastique rigide, de telle sorte que l'ensemble forme une seule pièce bimatière.

On citera comme matières plastiques possibles, le PVC souple et rigide.

La présente invention n'est nullement limitée au mode de réalisation décrit et représenté mais l'homme du métier saura y apporter toute variante conforme à son esprit.

En particulier, on peut envisager, selon une variante non représentée, un embout du même type que celui représenté sur la figure 2, mais comportant une seule patte de fixation (similaire par exemple à une des pattes de fixation de l'embout représenté sur la figure 2) supportant une cheminée et raccordée à la partie d'obturation par une partie de raccordement ondulée formant une liaison élastique entre les parties d'obturation et de fixation.

On peut également envisager, selon une autre variante non représentée, un embout du même type que celui représenté sur la figure 2, mais comportant une seule patte de fixation (similaire à l'une des pattes de fixation de l'embout représenté sur la figure 2) présentant une double largeur par rapport à une patte de fixation de l'embout représenté sur la figure 2, et supportant deux cheminées identiques parallèles, cette patte de fixation à double largeur étant raccordée à la partie d'obturation par deux parties de raccordement ondulées formant des liaisons élastiques et s'étendant en parallèle entre les cheminées et la partie d'obturation, chacune desdites parties de raccordement étant issue de la paroi externe d'une cheminée.

## Revendications

1. Embout (100) destiné à fermer une extrémité d'une goulotte, comprenant une partie d'obturation (110) pour fermer l'espace intérieur de la goulotte et une partie de fixation (120) sur le fond du socle de la goulotte, les parties d'obturation et de fixation étant raccordées l'une à l'autre par une partie de raccordement (123, 124), **caractérisé en ce que** ladite partie de raccordement (123, 124) constitue une liaison élastique qui autorise un déplacement de la partie d'obturation (110) par rapport à la partie de fixation (120).

2. Embout (100) selon la revendication 1, **caractérisé en ce que** ladite liaison élastique (123, 124) est agencée de manière à autoriser un léger déplacement en translation selon la direction longitudinale de la goulotte de la partie d'obturation par rapport à la partie de fixation.

3. Embout (100) selon l'une des revendications 1 ou 2, **caractérisé en ce que** la liaison élastique forme une articulation autorisant un léger débattement angulaire de la partie d'obturation (110) par rapport à la partie de fixation (120).

4. Embout selon l'une des revendications 1 à 3, **caractérisé en ce que** la partie de fixation (110), la partie d'obturation (120) et la liaison élastique (123, 124) forment une seule pièce issue de moulage de matière plastique.

5. Embout selon l'une des revendications précédentes, **caractérisé en ce que** la partie d'obturation comprend une paroi de fermeture (114) de l'intérieur de la goulotte et une portion de couvercle (111, 112, 113) destinée à recouvrir une coupe du couvercle de fermeture de ladite goulotte, ladite paroi de fermeture (114) et la portion de couvercle (112, 113, 114) formant une seule pièce issue de moulage.

6. Embout selon l'une des revendications précédentes, **caractérisé en ce que** la liaison élastique comprend au moins une languette ondulée (123, 124) dont une extrémité est liée à la partie de fixation (120) et dont l'autre extrémité est liée à la partie d'obturation (110).

7. Embout selon la revendication 6, **caractérisé en ce que** ladite languette ondulée est agencée de sorte que ses ondulations s'étendent de part et d'autre d'un plan vertical longitudinal.

8. Embout selon la revendication 6, **caractérisé en ce que** ladite languette ondulée est agencée de sorte que ses ondulations s'étendent de part et d'autre d'un plan horizontal longitudinal.

9. Embout selon l'une des revendications précédentes, **caractérisé en ce que** la liaison élastique est une languette souple qui s'étend généralement en oblique entre ladite patte de fixation et la partie d'obturation.

10. Embout selon l'une des revendications 1 à 8, **caractérisé en ce que** la liaison élastique est une languette souple (123) qui s'étend dans un plan horizontal selon l'axe longitudinal de la goulotte à partir de la base de la partie d'obturation (110) jusqu'à la base de la partie de fixation (120).

11. Embout (100) selon l'une des revendications 1 à 8, **caractérisé en ce que** la liaison élastique est une languette souple (123) qui s'étend dans un plan horizontal selon l'axe longitudinal de la goulotte en hauteur par rapport au socle de la goulotte.

12. Embout (100) selon l'une quelconque des revendications précédentes, **caractérisé en ce que** la liaison élastique est réalisée par moulage d'une matière plastique souple et les parties d'obturation et de fixation étant réalisées par moulage d'une matière plastique rigide, l'ensemble formant une pièce monobloc.

## Claims

1. End cap (100) for closing one end of trunking, said end cap having a closure part (110) for closing an interior space of the trunking and a fixing part (120) for fixing it to a back of a base section of the trunking, the closure and fixing parts being connected together by a connecting part (123, 124), **characterised in that** said connecting part (123, 124) constitutes an elastic coupling which allows the closure part (110) to move relative to the fixing part (120).

2. End cap (100) according to claim 1, **characterised in that** said elastic coupling (123, 124) allows slight movement of the closure part relative to the fixing part in translation in a longitudinal direction of the trunking.

3. End cap (100) according to claim 1 or 2, **characterised in that** the elastic coupling forms a hinge allowing slight angular movement of the closure part (110) relative to the fixing part (120).

4. End cap according to any one of claims 1 to 3, **characterised in that** the fixing part (110), the closure part (120) and the elastic coupling (123, 124) are moulded in one piece from plastics material.

5. End cap according to any preceding claim, **characterised in that** the closure part includes a closure wall (114) for closing the interior space of the trunking and a cover portion (111, 112, 113) for covering a cut end of the closure cover section of said trunking and said closure wall (114) and the cover portion (112, 113, 114) are moulded in one piece.

6. End cap according to any preceding claim, **characterised in that** the elastic coupling includes at least one corrugated tongue (123, 124) which has one end connected to the fixing part (120) and the other end connected to the closure part (110).

7. End cap according to claim 6, **characterised in that** said corrugated tongue has corrugations on opposite sides of a longitudinal vertical plane.

8. End cap according to claim 6, **characterised in that** said corrugated tongue has corrugations on opposite sides of a longitudinal horizontal plane.

9. End cap according to any preceding claim, **characterised in that** the elastic coupling is a flexible tongue which extends generally obliquely between said fixing lug and the closure part.

10. End cap according to any of claims 1 to 8, **characterised in that** the elastic coupling is a flexible tongue (123) which extends in a horizontal plane along a longitudinal axis of the trunking from a base of the closure part (110) to a base of the fixing part (120).

11. End cap (100) according to any of claims 1 to 8, **characterised in that** the elastic coupling is a flexible tongue (123) which extends in a horizontal plane along a longitudinal axis of the trunking in a heightwise direction relative to the base section of the trunking.

12. End cap (100) according to any preceding claim, **characterised in that** the elastic coupling is obtained by moulding a flexible plastics material, the closure and fixing parts are obtained by moulding a rigid plastics material and their combination forms a one-piece component.

## Patentansprüche

1. Endstück (100), das zum Verschließen eines Endes eines Installationskanals bestimmt ist, mit einem Verschlussteil (110) zum Verschließen des Innenraums des Installationskanals und einem Befestigungsteil (120) am Boden des Installationskanalsockels, wobei das Verschluss- und das Befestigungsteil durch ein Verbindungsteil (123, 124) miteinander verbunden sind,
**dadurch gekennzeichnet, dass** das Verbindungsteil (123, 124) eine elastische Verbindung bildet, die ein Verschieben des Verschlussteils (110) bezüglich des Befestigungsteils (120) gestattet.

2. Endstück (100) nach Anspruch 1,
**dadurch gekennzeichnet, dass** die elastische Verbindung (123, 124) solchermaßen angeordnet ist, dass sie eine geringfügige translatorische Verschiebebewegung des Verschlussteils bezüglich des Befestigungsteils in Längsrichtung des Installationskanals gestattet.

3. Endstück nach einem der Ansprüche 1 oder 2,
**dadurch gekennzeichnet, dass** die elastische Verbindung ein Gelenk bildet, das eine geringfügige winkelmäßige Verschiebbarkeit des Verschlussteils (110) bezüglich des Befestigungsteils (120) gestattet.

4. Endstück nach einem der Ansprüche 1 bis 3,
**dadurch gekennzeichnet, dass** das Befestigungsteil (110), das Verschlussteil (120) und die elastische Verbindung (123, 124) ein einziges durch Formgießen eines Kunststoffs entstandenes Teil bilden.

5. Endstück nach einem der vorhergehenden Ansprüche,
**dadurch gekennzeichnet, dass** das Verschlussteil eine Wand (114) zum Abschließen des Inneren des Installationskanals und ein Deckelstück (111, 112, 113) aufweist, das zum Verdecken einer Schnittfläche des Verschlussdeckels des Installationskanals bestimmt ist, wobei die Abschlusswand (114) und das Deckelstück (111, 112, 113) ein einziges durch Formgießen entstandenes Teil bilden.

6. Endstück nach einem der vorhergehenden Ansprüche,
**dadurch gekennzeichnet, dass** die elastische Verbindung wenigstens eine gewellte Lasche (123, 124) aufweist, die mit ihrem einen Ende mit dem Befestigungsteil (120) verbunden ist und mit ihrem anderen Ende mit dem Verschlussteil (110) verbunden ist.

7. Endstück nach Anspruch 6,
**dadurch gekennzeichnet, dass** die gewellte Lasche solchermaßen angeordnet ist, dass sich ihre Wellungen beidseits einer vertikalen Längsebene erstrecken.

8. Endstück nach Anspruch 6,
**dadurch gekennzeichnet, dass** die gewellte Lasche solchermaßen angeordnet ist, dass sich ihre Wellungen beidseits einer horizontalen Längsebene erstrecken.

9. Endstück nach einem der vorhergehenden Ansprüche,
**dadurch gekennzeichnet, dass** die elastische Verbindung eine biegbare Lasche ist, die zwischen dem Befestigungsteil und dem Verschlussteil allgemein schräg verläuft.

10. Endstück nach einem der Ansprüche 1 bis 8,
**dadurch gekennzeichnet, dass** die elastische Verbindung eine biegbare Lasche ist, die sich in einer horizontalen Ebene längs der Längsachse des Installationskanals von der Basis des Verschlussteils (110) bis zur Basis des Befestigungsteils (120) erstreckt.

11. Endstück (100) nach einem der Ansprüche 1 bis 8,
**dadurch gekennzeichnet, dass** die elastische Verbindung eine biegbare Lasche (123) ist, die sich in einer horizontalen Ebene längs der Längsachse des Installationskanals bezüglich des Installationskanalsockels in der Höhe erstreckt.

12. Endstück (100) nach einem der vorhergehenden Ansprüche,
**dadurch gekennzeichnet, dass** die elastische Verbindung durch Formgießen eines weichen Kunststoffs ausgeführt ist, wobei das Verschluss- und das Befestigungsteil durch Formgießen eines harten Kunststoffs ausgeführt sind, wobei die Einheit ein einstückig ausgebildetes Teil bildet.
